# FASCICULE DE BREVET EUROPEEN

(11) **EP 2 085 003 B1**
(45) Date de publication et mention de la délivrance du brevet: **13.04.2011**
(21) Numéro de dépôt: 09003418.2
(22) Date de dépôt: 08.06.2005
(51) Int. Cl.: A47J 37/04, A47J 37/06

(54) **Friteuse à enduction automatique de matiére grasse**
Fritteuse mit automatischer Beschichtung mit Fett
Deep fryer with automatic fat coating

(30) Priorité: 08.06.2004 FR 0406214
(43) Date de publication de la demande: 05.08.2009
(62) Demande divisionnaire de: 05775356.8
(73) Titulaire: SEB S.A., 69132 Ecully Cedex (FR)
(72) Inventeur: Payen, Jean-Marc, 21800 Quetigny (FR); Bizard, Jean-Claude, 21121 Fontaine-Les-Dijon (FR)
(74) Mandataire: Martin, Didier Roland Valéry

(56) Documents cités:
- EP-A- 0 213 074
- WO-A-87/01021
- DE-A1- 2 102 062
- DE-A1- 2 127 758
- DE-C1- 4 125 057
- FR-A- 2 470 575
- US-A- 4 120 981
- US-A- 4 581 989
- US-A- 6 054 681
- US-B1- 6 240 838

## Description

### DOMAINE TECHNIQUE

La présente invention se rapporte au domaine technique général des appareils de cuisson d'aliments, et en particulier des appareils domestiques conçus pour frire des aliments à l'aide de matière grasse, du genre friteuses.

La présente invention concerne une friteuse comprenant un corps principal destiné à accueillir en son sein des aliments à frire.

La présente invention concerne également un procédé de friture d'aliments.

### TECHNIQUE ANTERIEURE

Il est bien connu, dans l'art antérieur, de frire des aliments, tels que des morceaux de pommes de terre, à l'aide d'une friteuse électrique domestique. De manière classique, une telle friteuse électrique domestique comprend d'une part une cuve destinée à être remplie d'huile ou de matière grasse, et d'autre part des résistances chauffantes permettant de chauffer le contenu de la cuve.

Les friteuses électriques connues permettent ainsi de réaliser un bain d'huile ou de matière grasse fondue à haute température dans lequel on plonge les aliments à frire, par exemple par l'intermédiaire d'un panier de cuisson.

Ce mode de friture classique par immersion dans un bain d'huile chaude, s'il donne généralement satisfaction, présente toutefois de nombreux inconvénients.

En premier lieu, ces friteuses classiques mettent en oeuvre, pour réaliser le bain de cuisson, une quantité importante d'huile. Cela implique des difficultés de manipulation pour l'utilisateur lorsqu'il remplit sa friteuse, lorsqu'il la déplace et surtout lorsqu'il la vide.

Ce bain de cuisson à haute température est également source de risque de brûlures, que ce soit par projections hors de la cuve de l'appareil ou par suite d'une maladresse de l'utilisateur (renversement de l'appareil). Ce risque de brûlures ou d'accidents est accru par le fait qu'une quantité aussi importante d'huile nécessite, avant d'introduire les aliments dans la cuve pour les frire, une phase de préchauffage relativement longue. Cela peut conduire l'utilisateur à oublier son bain d'huile en phase de préchauffe, avec toutes les conséquences néfastes que cette absence de surveillance pourrait engendrer.

Par ailleurs, ces friteuses connues s'avèrent d'un usage relativement coûteux, puisqu'elles nécessitent l'achat régulier d'une grande quantité d'huile (au minimum 1,5 à 2 L d'huile sont en effet généralement nécessaires pour frire 1 Kg de morceaux de pommes de terre fraîches). L'utilisateur est donc naturellement conduit à économiser l'huile en réutilisant plusieurs fois le même bain de cuisson, ce qui est peu satisfaisant du point de vue de l'hygiène et du goût. De plus, l'utilisateur peut réutiliser un bain de cuisson, alors que celui-ci s'est dégradé, ce qui peut être néfaste pour la santé. Lorsque l'utilisateur se débarrasse de l'huile usagée, ceci peut avoir des conséquences dommageables pour l'environnement.

Enfin, le chauffage à haute température d'une telle quantité d'huile provoque d'une part des dégagements d'odeurs qui peuvent s'avérer particulièrement désagréables, et d'autre part une polymérisation de l'huile qui rend le nettoyage de l'appareil difficile et contraignant.

On connaît par ailleurs des produits alimentaires prêts à l'emploi, dits « *frites au four* », qui consistent en des morceaux de pommes de terre précuits et pré-imprégnés d'huile, destinés à être cuits dans un four, sans immersion dans un bain d'huile.

Les qualités gustatives de ces « *frites au four* » sont généralement jugées médiocres et en tout cas très éloignées de celles des frites cuites par immersion dans un bain d'huile, lesquelles présentent notamment un coeur moelleux entouré d'une enveloppe croustillante.

De surcroît, le mode de cuisson « *au four* » impose d'utiliser des produits déjà préparés, qui, par essence, ne présentent pas des qualités organoleptiques aussi attrayantes que celles d'un aliment frais.

On connaît du document DE-2 102 062 un appareil de cuisson pourvu d'un récipient et d'une pale tournant au sein du récipient.

### EXPOSE DE L'INVENTION

L'objet assigné à invention vise en conséquence à porter remède aux différents inconvénients énumérés précédemment et à proposer une nouvelle friteuse et un nouveau procédé de friture qui soient particulièrement hygiéniques, sûrs et économiques à l'usage, ainsi que faciles à utiliser et à mettre en oeuvre, tout en laissant une grande liberté à l'utilisateur dans le choix des aliments qu'il souhaite frire.

Un autre objet de invention vise à proposer une nouvelle friteuse et un nouveau procédé de friture de conceptions particulièrement simples et fiables.

Un autre objet de l'invention vise à proposer une nouvelle friteuse et un nouveau procédé de friture qui permettent d'obtenir un goût et une coloration des aliments frits particulièrement homogènes et attrayants.

Un autre objet de l'invention vise à proposer une nouvelle friteuse et un nouveau procédé de friture qui soient à même de procurer un résultat optimal quelles que soient la taille et la quantité des aliments à frire.

Un autre objet de l'invention vise à proposer une nouvelle friteuse et un nouveau procédé de friture qui n'affectent sensiblement pas l'intégrité et la forme des aliments.

Un autre objet de l'invention vise à proposer une nouvelle friteuse et un nouveau procédé de friture ne nécessitant, en terme de maintenance et de nettoyage, que des opérations particulièrement faciles et rapides, pouvant être effectuées aisément après chaque cuisson.

Un autre objet de l'invention vise à proposer une nouvelle friteuse et un nouveau procédé de friture qui permettent à l'utilisateur de contrôler de façon précise la quantité et la qualité de la matière grasse utilisée pour la cuisson.

Un autre objet de l'invention vise à proposer une nouvelle friteuse et un nouveau procédé de friture dont l'utilisation et la mise en oeuvre ne nécessitent qu'un minimum d'interventions de la part de l'utilisateur.

Un autre objet de l'invention vise à proposer une nouvelle friteuse et un nouveau procédé de friture qui permettent une cuisson rapide des aliments.

Un autre objet de l'invention vise à proposer une nouvelle friteuse et un nouveau procédé de friture qui permettent une excellente qualité de cuisson d'aliments même lorsque ces derniers présentent des dimensions très différentes entre eux.

Un objet complémentaire de l'invention vise à proposer une nouvelle friteuse et un nouveau procédé de friture qui sont économes en consommation d'énergie tout en permettant d'obtenir des produits frits présentant d'excellents aspect et texture.

Les objets assignés à l'invention sont atteints à l'aide d'une friteuse à cuisson sèche conforme à l'objet de la revendication 1.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue générale en perspective, une friteuse conforme à un premier mode de réalisation de invention.
- La figure 2 illustre, selon une vue latérale en coupe médiane, la friteuse représentée à la figure 1.
- La figure 3 illustre, selon une vue de côté, un sous-ensemble pale-poignée faisant partie de la friteuse des figures 1 et 2.
- La figure 4 illustre, selon une vue de dessus, le sous-ensemble de la figure 3.
- La figure 5 illustre, selon une vue latérale en coupe médiane, le sous-ensemble des figures 3 et 4.
- La figure 6 illustre, selon une vue latérale partielle en coupe, une friteuse conforme à un second mode de réalisation de l'invention.

### MEILLEURE MANIERE DES REALISER L'INVENTION

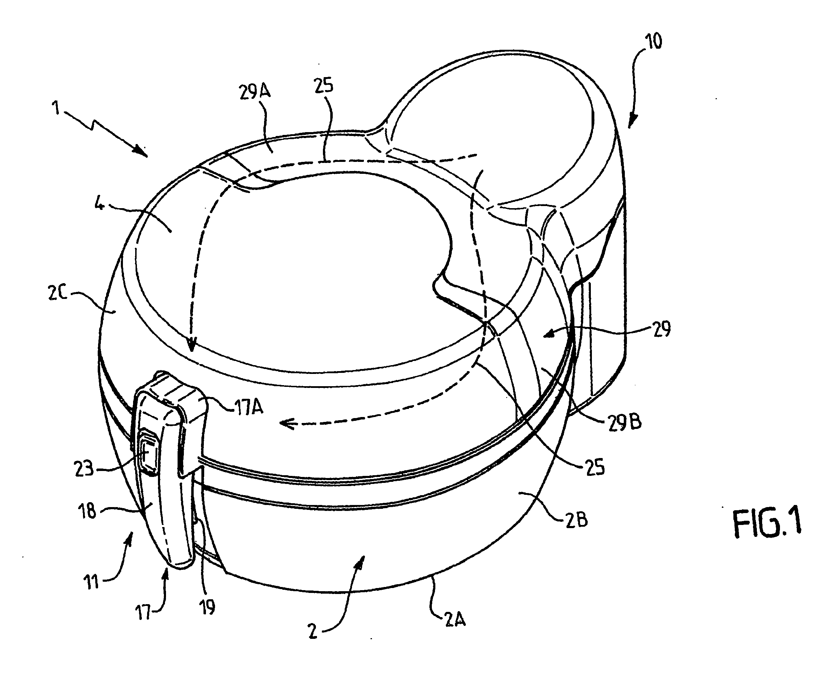

La friteuse 1 illustrée aux figures 1 à 5 est une friteuse électrique conçue et dimensionnée pour un usage domestique. L'invention n'est cependant pas limitée au cadre familial, et pourra concerner également les friteuses semi-professionnelles ou professionnelles.

La friteuse domestique 1 illustrée aux figures est préférentiellement conçue et dimensionnée pour frire des aliments particulaires, tels que des morceaux de pommes de terre, en vue d'obtenir des frites. Ces morceaux de pommes de terre pourront avoir été coupés manuellement par l'utilisateur, ou avoir été achetés déjà préparés dans le commerce, à l'état frais ou surgelé. La friteuse 1 conforme à l'invention n'est cependant pas limitée à l'élaboration de pommes de terre frites, et peut être utilisée pour faire des fritures avec d'autres sortes d'aliments (viandes, poissons, légumes...) sans pour autant que l'on sorte du cadre de l'invention.

La friteuse conforme à l'invention est une friteuse à cuisson sèche. Par « *cuisson sèche* », on désigne ici un mode de cuisson d'aliments sans immersion de ces derniers dans un bain d'huile ou de matière grasse, que cette immersion soit partielle et/ou temporaire pendant le cycle de cuisson. L'expression « *cuisson sèche »* désigne au contraire une cuisson dans laquelle les aliments sont certes *« mouillés »* par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile.

La friteuse 1 conforme à l'invention comprend, de façon classique, un corps principal 2 destiné à accueillir en son sein des aliments à frire (non représentés).

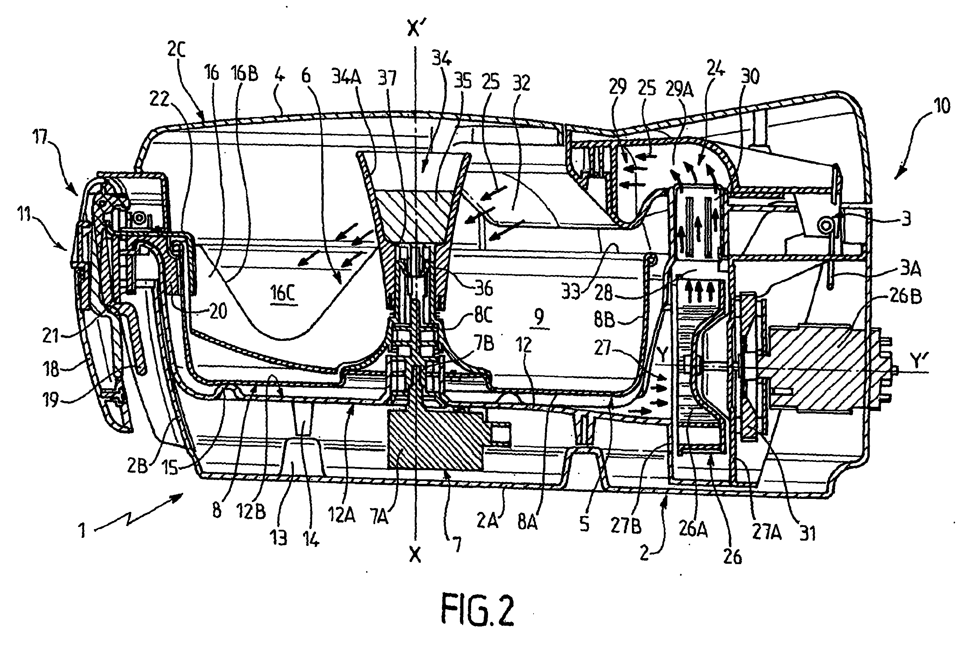

Tel que cela est représenté aux figures 1 et 2. le corps principal 2 comprend une embase 2A, destinée à former le socle de la friteuse 1, et conformée pour reposer de façon stable sur un plan ou un support.

A partir de l'embase 2A et à la périphérie de cette dernière s'élève une jupe latérale 2B, réalisée par exemple en un matériau métallique ou en un matériau plastique, et formant l'enveloppe externe de la friteuse 1. La jupe latérale 2B peut présenter toutes formes géométriques appropriées et esthétiques. Par exemple, dans le cas de la friteuse représentée à la figure 1, la jupe 2B présente, en vue de dessus, une forme globalement en « 8 », le sommet du « *8* » définissant l'arrière 10 de la friteuse 1, tandis que la base du « *8* » définit l'avant 11 de ladite friteuse 1.

Avantageusement, le corps principal 2 est muni d'un couvercle 2C monté mobile entre d'une part une position de fermeture (représentée à la figure 1), dans laquelle le couvercle 2C forme avec le corps principal 2 une enceinte sensiblement fermée autour des aliments à frire, et d'autre part une position d'ouverture (non représentée), autorisant l'introduction des aliments à frire au sein du corps principal 2. En d'autres termes, le couvercle 2C forme, en coopération avec la jupe 2B et l'embase 2A, un boîtier clos, c'est-à-dire de préférence sensiblement hermétique, autorisant une cuisson en atmosphère fermée. La fermeture sensiblement étanche du corps principal 2 par le couvercle 2C peut être réalisée par exemple par l'intermédiaire de joints d'étanchéité (non représentés aux figures).

Tel que cela est représenté aux figures 1 et 2, le couvercle 2C est avantageusement monté sur le corps principal 2 par une liaison pivot élastique, réalisée par une charnière 3 munie d'un ressort de torsion 3A, de telle sorte que la position d'ouverture du couvercle 2C soit également une position de rappel. Ladite charnière 3 est par ailleurs de préférence positionnée en périphérie de l'appareil, au voisinage de l'arrière 10 de la friteuse 1, tel que cela est représenté à la figure 2.

Avantageusement, et tel que cela est représenté à la figure 1, le couvercle 2C pourra être pourvu d'une zone transparente de vision 4 permettant de surveiller l'évolution de la friture à l'intérieur de l'appareil pendant le cycle de cuisson, lorsque le couvercle 2C est fermé sur le corps principal 2.

Selon une caractéristique importante de l'invention, la friteuse 1 comporte, monté au sein du corps principal 2, un moyen pour enduire automatiquement les aliments à frire d'une pellicule de matière grasse, par brassage desdits aliments avec de la matière grasse.

En d'autres termes, contrairement aux dispositifs de l'art antérieur, dans lesquels les aliments sont immergés dans un bain d'huile, l'invention repose sur le principe d'une friture réalisée en recouvrant simplement la surface des aliments d'une mince couche d'huile ou de toute autre matière grasse alimentaire appropriée. Ainsi, la cuisson ne se fait pas dans un bain d'huile, lequel implique la présence d'une quantité importante de matière grasse entourant tout ou partie des aliments, mais bien grâce à une faible quantité d'huile formant un mince revêtement sensiblement homogène à la surface de chacun des aliments placés au sein du corps principal 2.

Ainsi que cela a été précisé précédemment, l'enduction de matière grasse est réalisée de manière automatique, c'est-à-dire sans nécessité d'une contribution essentielle et directe de l'utilisateur pour l'établissement de la pellicule de graisse à la surface des aliments. En d'autres termes, grâce à la présence, au sein du corps principal 2, d'un moyen pour enduire automatiquement les aliments d'une pellicule de matière grasse, l'utilisateur n'a qu'à se contenter d'introduire les aliments dans la friteuse 1, au sein du corps principal 2, puis d'activer la mise en oeuvre du moyen d'endudion automatique (dans la mesure où cette activation n'est pas elle-même automatique) pour que la friteuse 1 se charge elle-même directement, au sein du corps principal 2, d'enduire individuellement les aliments d'une fine couche de matière grasse, sans que l'utilisateur ne soit contraint de réaliser lui-même cette opération de façon manuelle.

Le terme « *brassage* » est ici relatif à l'action de brasser, c'est-à-dire de *« remuer en mêlant* ». Au sens de l'invention, l'enduction des aliments est donc obtenue en réunissant des aliments et de la matière grasse, et en les brassant pour recouvrir les aliments d'une pellicule de matière grasse.

L'action de brassage mise en oeuvre dans le cadre de l'invention implique de préférence un retournement des aliments et de la matière grasse, retournement qui peut par exemple être opéré par soulèvement des aliments et mise en rotation de ces derniers sur eux-mêmes.

Le moyen pour enduire automatiquement les aliments d'une pellicule de matière grasse comprend d'une part un moyen de réception 5 conçu pour contenir, de préférence directement, à la fois les aliments à frire et de la matière grasse, notamment lorsque cette dernière se présente sous forme liquide (huile ou graisse fondue), et d'autre part un moyen de remuage 6 des aliments contenus dans le moyen de réception 5.

La fonction de brassage est donc préférentiellement obtenue par la coopération d'une part du moyen de remuage 6, qui contribue en particulier à conférer aux aliments et à la matière grasse un mouvement tridimensionnel, du genre mouvement de malaxage, et d'autre part du moyen de réception 5, qui assure notamment une fonction de maintien des aliments dans une zone prédéterminée de l'appareil.

Avantageusement, le moyen de réception 5 est monobloc, c'est-à-dire qu'il présente un caractère unitaire, et qu'il est formé de préférence d'une seule pièce. De manière préférentielle, afin de remplir sa fonction de contenance d'aliments et de matière grasse, le moyen de réception 5 est également non ajouré, à la différence d'un panier, pour éviter toute fuite de matière grasse.

En d'autres termes, le moyen de réception 5 est de préférence sensiblement étanche aux matières liquides ou semi-liquides.

Le moyen de réception 5 et le moyen de remuage 6 sont distincts.

Conformément à l'invention, le moyen de réception 5 et le moyen de remuage 6 sont conçus pour être mis en mouvement l'un par rapport à l'autre, de façon à brasser et remuer les aliments et la matière grasse au sein du moyen de réception 5, afin de recouvrir sensiblement chaque aliment d'une pellicule sensiblement uniforme, homogène et continue de matière grasse.

Avantageusement, le moyen de remuage 6 est monté immobile en position relativement au corps principal 2, tandis que le moyen de réception 5 est d'une part monté à rotation relativement au corps principal 2 et au moyen de remuage 6, et d'autre part relié fonctionnellement à un moyen moteur 7 pour être entraîné en rotation par ce dernier.

Un tel principe de montage correspond à celui mis en oeuvre sur la friteuse 1 conforme à la première variante de réalisation illustrée aux figures 1 à 5, et qui fera l'objet de la description qui suit.

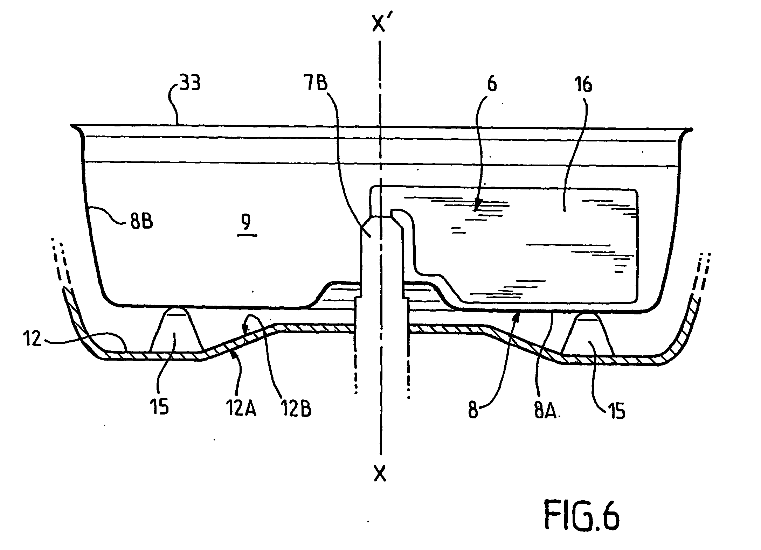

Il est néanmoins tout à fait envisageable, sans pour autant sortir du cadre de l'invention, que la friteuse 1 mette en oeuvre un moyen de remuage 6 monté mobile relativement au corps principal et au moyen de réception 5, le moyen de réception 5 pouvant alors être monté immobile en position au sein du corps principal (cas de la seconde variante illustrée à la figure 6), ou être monté mobile au sein dudit corps principal.

Ainsi, conformément à la seconde variante de réalisation illustrée à la figure 6, le moyen de réception 5 est de préférence monté immobile en position relativement au corps principal 2, tandis que le moyen de remuage 6 est d'une part monté à rotation relativement au moyen de réception 5, et d'autre part relié fonctionnellement à un moyen moteur 7 pour être entraîné en rotation par ce dernier.

Avantageusement, le moyen de réception 5 comprend un récipient 8 délimitant un volume interne 9, destiné à accueillir et contenir à la fois les aliments et de la matière grasse, même lorsque cette dernière est liquide (cas d'une huile par exemple) ou semi-liquide (cas d'une graisse fondue de viscosité élevée par exemple).

Le récipient 8 est monté de façon amovible sur le corps principal 2.

De manière préférentielle, le récipient 8 comprend un fond de récipient 8A, de préférence sensiblement plan et lisse, à partir de la périphérie interne et externe duquel s'élèvent en vis-à-vis respectivement une paroi latérale externe 8B et une paroi latérale interne 8C, de telle sorte que le récipient 8 présente sensiblement une forme générale de canal annulaire, présentant sensiblement une symétrie de révolution d'axe vertical X-X'. En d'autres termes, le récipient 8 présente globalement une forme toroïdale, générée par la rotation autour de l'axe de symétrie X-X' d'un profil ouvert sensiblement en forme de « *U* ».

D'autres formes de récipient sont bien évidemment envisageables. Par exemple, tel que cela est illustré à la figure 6, le fond 8A peut présenter une forme discoïde, à partir de la périphérie de laquelle s'élève une paroi latérale annulaire 8B.

De manière préférentielle, le fond 8A et/ou les parois latérales internes et externes 8B, 8C sont sensiblement pleins, c'est-à-dire non ajourés, du moins dans la zone d'interface avec les aliments et la matière grasse, afin d'éviter toute fuite de cette dernière hors du récipient 8. De manière préférentielle, le fond sera intégralement plein tandis que les parois latérales 8B, 8C seront pleines au moins dans leur partie inférieure, c'est-à-dire à proximité de leur raccordement avec le fond 8A.

De préférence, le récipient 8 délimite un volume 9 ouvert, c'est-à-dire délimité uniquement par le fond 8A et les parois latérales internes et externes 8B, 8C, sans élément de couvercle disposé à l'opposé du fond 8A. Selon le mode de réalisation des figures 1 à 5, l'entraînement en rotation du récipient 8 est effectué à l'aide d'un premier moteur électrique 7A formant moyen moteur 7, ledit premier moteur électrique 7A étant pourvu d'un arbre de sortie 7B s'étendant de façon sensiblement coaxiale à l'axe X-X', et solidarisé à la paroi latérale interne 8C. Plus précisément, l'arbre de sortie 7B est enchâssé, de préférence de façon amovible, dans le manchon formé par la paroi latérale interne 8C.

Dans le mode de réalisation de la figure 6, le récipient 8 est indépendant de l'arbre 7B, ce dernier étant solidarisé au moyen de remuage 6 afin d'entraîner ledit moyen de remuage 6 en rotation autour de l'axe X-X'. Dans cette variante, un orifice de passage est ménagé dans le fond 8A afin d'autoriser le passage et la rotation de l'arbre 7B.

Dans les exemples de réalisation illustrés aux figures 2 et 6, le premier moteur électrique 7A est installé dans un logement délimité, dans la direction de l'axe X-X', d'une part par l'embase 2A, et d'autre part par un carter 12. Ledit carter 12 présente une face interne 12A située en regard du premier moteur électrique 7A, et une face externe 12B opposée. La face interne 12A du carter 12 est maintenue à distance de l'embase 2A par des entretoises, formées de préférence par des pieds 13, 14 en appui mutuel, issus respectivement de l'embase 2A et de la face interne 12A du carter 12.

De manière préférentielle, tel que cela est illustré aux figures 2 et 6, des bossages 15 sont issus de la face externe 12B du carter 12, lesdits bossages 15 faisant office, dans la variante de la figure 2, de moyens d'appui glissant pour le récipient 8, et de moyen d'appui simple pour le récipient 8 dans le cas de la variante de la figure 6.

De manière préférentielle, le moyen de remuage 6 comprend également une pale 16 disposée au sein du volume interne 9 délimité par le récipient 8, de façon à former, dans la variante de la figure 2, un obstacle sensiblement immobile à l'encontre des aliments mis en mouvement par la rotation du récipient 8. Ainsi, une fois les aliments et la matière grasse disposés (manuellement et/ou automatiquement) dans le récipient 8, ce dernier est mis en rotation à l'aide du premier moteur électrique 7A, ce qui entraîne un déplacement globalement circulaire des aliments et de la matière grasse autour de l'axe X-X', jusqu'à ce que les aliments rencontrent l'obstacle formé en l'occurrence par la pale 16, obstacle qui contribue à retourner et brasser les aliments et la matière grasse, réalisant ainsi l'enduction rapide et sensiblement uniforme desdits aliments.

Dans la variante de la figure 6, c'est au contraire la pale 16 qui, lorsqu'elle est mise en rotation dans le récipient 8, au sein du volume interne 9, assure un déplacement actif des aliments et de la matière grasse de façon à réaliser l'enduction desdits aliments.

Afin d'optimiser, en terme d'homogénéité et de rapidité, l'enduction des aliments par une pellicule de matière grasse, la pale 16 mise en oeuvre dans la variante de la figure 2 est de préférence conformée pour :
- d'une part s'élever, à partir d'un bord inférieur 16A situé sensiblement au niveau du fond 8A du récipient 8, jusqu'à un bord supérieur 16B, la pale 16 présentant une découpure 16C en forme de « V » débouchant sensiblement au niveau dudit bord supérieur 16B,
- et d'autre part s'étendre latéralement sensiblement de la paroi latérale externe 8B jusqu'à la paroi latérale 8C.

En d'autres termes, la pale 16 de la variante de la figure 2 forme un obstacle de hauteur D variable dans la direction radiale définie par rapport à l'axe de symétrie X-X'. Ainsi, cette hauteur D est maximale au niveau des extrémités latérales délimitées respectivement par la paroi latérale externe 8B et la paroi latérale interne 8C, la hauteur D décroissant régulièrement à partir de la paroi latérale externe 8B et de la paroi latérale interne 8C jusqu'à un minimum Dₘᵢₙ (pointe du « V ») correspondant par exemple sensiblement au milieu de la distance séparant lesdites parois latérales externes 8B et interne 8C.

Cette disposition technique confère un caractère universel à la pale 16, qui est de ce fait apte à assurer le retournement et le brassage des aliments quelles que soient leur quantité et leur taille, dans la limite du dimensionnement de la friteuse 1.

En particulier, dans le cas d'une faible quantité d'aliments, la faible hauteur au centre (pointe du « V ») de la pale 16 est dimensionnée pour permettre d'assurer tout de même un brassage suffisant pour enduire correctement de matière grasse les aliments.

De façon préférentielle, afin de faciliter le travail de la pale 16, le bord inférieur 16A de cette dernière est incurvé pour guider les aliments vers le bord supérieur 16B lorsque le récipient 8 est mis en rotation.

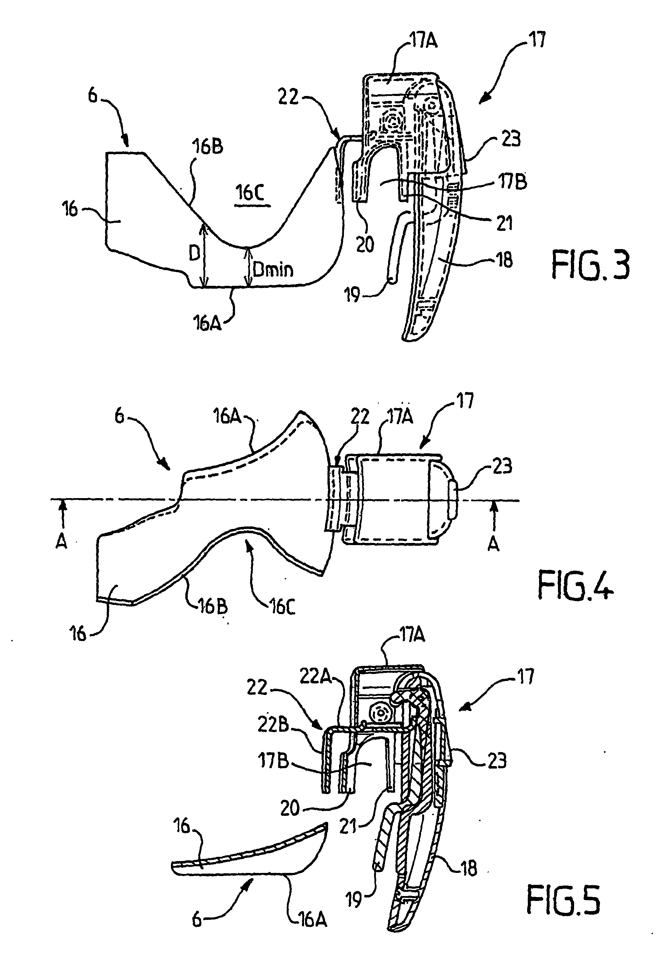

Avantageusement, le bord inférieur 16A de la pale est également biseauté, et présente une incidence oblique relativement au trajet des aliments dans le plan horizontal (cf. figure 4), afin de faciliter l'accostage de ces derniers sur la pale 16.

De façon préférentielle, la pale est également globalement inclinée, à la manière d'un tremplin, relativement à l'axe X-X', de façon à faciliter l'engagement des aliments sans les abîmer.

La pale 16 est de préférence réalisée en un matériau présentant de bonnes propriétés de glissement. La pale peut avantageusement être revêtue d'un matériau anti-adhésif, par exemple du polytétrafluoroéthylène (PTFE), ou encore être réalisée en acier inoxydable (inox) ou en polyamide 4-6.

Le fond du récipient 8 présente avantageusement des conformations, du genre protubérances, susceptibles de servir de butée pour les aliments à frire, afin de permettre à la pale 16, agissant en coopération avec lesdites conformations, de soulever lesdits aliments, au lieu de simplement les repousser dans le récipient 8.

Avantageusement, la pale 16 est également montée de façon amovible sur le corps principal 2.

A cette fin, dans le cadre non limitatif de la variante de réalisation représentée à la figure 2, la pale 16 est solidaire (de façon amovible ou non) d'une poignée 17, de sorte que la pale 16 et la poignée 17 forment un sous-ensemble unitaire et indépendant qui peut être monté de façon amovible sur le corps principal 2.

Pour cela, la poignée 17 comprend de préférence une pièce d'accostage 17A munie d'une encoche 17B s'étendant entre une façade avant 20 et une façade arrière 21, de façon à former un étrier sensiblement en forme de « U » inversé.

Cet étrier est conformé pour venir reposer sur une pièce de réception complémentaire solidaire du corps principal 2 de la friteuse 1. Lorsque la poignée 17 repose ainsi sur le corps principal 2, la façade avant 20 vient s'interposer entre la paroi latérale externe 8B du récipient 8 et la jupe 2B, ou plus précisément, tel que cela est représenté à la figure 2, entre la paroi latérale externe 8B et le carter 12.

La poignée 17 comprend également une patte de serrage 22, conformée en forme de « *L* », un premier bras 22A du « L » étant monté à coulissement radial (c'est-à-dire perpendiculairement à l'axe X-X') sur la pièce 17A, tandis que le deuxième bras 22B est perpendiculaire au premier et s'étend sensiblement vers le bas parallèlement à la façade avant 20.

De manière avantageuse, la pale 16 est montée solidaire de la patte de serrage 22.

Lorsque la poignée 17 est positionnée sur le corps principal 2, la face latérale externe 8B du récipient 8 est ainsi interposée entre la façade avant 20 et la patte de serrage 22, laquelle supporte la pale 16.

La poignée 17 comprend également un organe de préhension manuelle 18, monté à pivotement sur la pièce 17A entre une position de cuisson, dans laquelle l'organe de préhension manuelle 18 s'étend sensiblement parallèlement à la jupe 2B et à l'axe X-X', et une position d'extraction du récipient 8, dans laquelle l'organe de préhension manuelle 18 s'étend sensiblement horizontalement, c'est-à-dire de façon sensiblement perpendiculaire à l'axe X-X'.

Lorsque l'organe de préhension manuelle 18 est en position horizontale d'extraction, l'utilisateur peut, en actionnant un levier de serrage 19 monté à pivotement coaxialement à l'organe de préhension 18, agir sur la patte de serrage 22, de façon à exercer un pincement de la paroi latérale externe 8B du récipient 8, par rapprochement de la patte de serrage 22 vers la façade avant 20. Ainsi, l'utilisateur est en mesure d'extraire simultanément le récipient 8 (lorsque celui-ci est amovible conformément aux revendications et la pale 16 à l'aide de la poignée 17, qui est débrayable du récipient 8.

De façon préférentielle, la poignée 17 est munie d'un système de verrouillage / déverrouillage 23, monté sur l'organe de préhension manuel 18, et agencé de façon à verrouiller automatiquement l'organe de préhension manuelle 18 en position d'extraction. L'utilisateur peut ensuite, en agissant sur ce moyen de verrouillage / déverrouillage 23, déverrouiller l'organe de préhension 18 pour libérer le récipient 8 et ramener l'organe de préhension 18 en position de cuisson.

Le chauffage des aliments enduits de matière grasse peut être réalisé, au sein de la friteuse 1, par tous moyens de chauffe connus internes (i.e. intégrés à la friteuse 1) ou externes (i.e. indépendants de la friteuse 1), dans la mesure où ces moyens de chauffe sont conçus et dimensionnés pour permettre un excellent échange thermique avec les aliments, ce qui s'avère d'autant plus important que la cuisson ne s'effectue pas en bain d'huile, mais simplement avec une enduction d'huile.

Avantageusement, la friteuse 1 comporte, monté sur le corps principal 2, un moyen de chauffe principal 24 conçu pour générer un flux chauffant 25, lequel est orienté de façon à frapper sensiblement directement au moins une partie des aliments au sein du corps principal 2.

Par « *moyen de chauffe principal* », on désigne un moyen de chauffe qui assure à lui seul au moins l'essentiel de l'apport thermique permettant la cuisson. De façon préférentielle, le moyen de chauffe principal 24 est conçu et agencé pour assurer la totalité dudit apport thermique.

Par flux chauffant, on désigne ici un faisceau thermique directionnel présentant un caractère dynamique contrôlé de façon positive, au contraire par exemple d'un simple effet de convection naturelle pouvant être obtenu par un chauffage purement statique.

Du fait que le flux chauffant 25 est dirigé pour venir s'exercer directement, sans médium intermédiaire (tel qu'un fond de récipient par exemple), sur les aliments présents dans le récipient 8, cela contribue à un excellent échange thermique, et procure, en coopération avec la pellicule d'huile présente sur les aliments, une cuisson sensiblement équivalente à celle obtenue en bain d'huile mais sans les inconvénients de cette dernière.

Avantageusement, le flux chauffant 25 est un flux d'air chaud. L'invention n'est cependant pas limitée à un flux d'air chaud, et on pourrait envisager que le flux chauffant soit issu d'un chauffage à infra-rouges par exemple. Un chauffage à air chaud est toutefois préféré, du moins dans le mode spécifique de réalisation représenté aux figures, car il donne de meilleurs résultats qu'un chauffage à infra-rouges, notamment dans le cas d'aliments découpés manuellement et présentant des morceaux de taille et d'épaisseur diverses.

Avantageusement, le flux d'air chauffant 25 est dirigé sensiblement vers le moyen de remuage, en l'occurrence la pale 16. En effet, par sa fonction d'obstacle, la pale 16 va contribuer à maintenir agglutinée dans son voisinage la majeure partie, voire la totalité des aliments présents dans le plat 8. Dès lors, il suffit d'orienter le flux d'air chauffant 25 vers la pale 16 pour chauffer de manière optimale les aliments, sans qu'il soit nécessaire d'exercer un chauffage uniforme sur l'ensemble du récipient 8. La combinaison d'une pale 16 et d'un flux d'air chaud 25 localisé s'avère donc particulièrement avantageuse en terme d'efficacité de cuisson, d'économie d'énergie et de simplicité de conception.

Avantageusement, le flux d'air chaud 25 est un flux recyclé, c'est-à-dire que la friteuse 1 travaille en ambiance sensiblement fermée, de l'air présent à l'intérieur du corps principal 2 étant prélevé pour être chauffé, puis propulsé sur les aliments. Cet air chaud propulsé se refroidit au contact des aliments, puis est à nouveau prélevé pour être réchauffé et ainsi de suite.

De manière avantageuse, le moyen de chauffe principal 24 comprend un ventilateur centrifuge 26 générant un flux aéraulique en aspirant de l'air au sein du corps principal 2 par au moins une ouïe d'entrée 27, ménagée de préférence latéralement relativement au récipient 8, et en refoulant cet air par au moins une ouïe de sortie 28 dans un dispositif de canalisation 29, lequel débouche en direction et au-dessus des aliments présents dans le corps principal 2.

Un filtre peut être prévu à l'entrée du ventilateur centrifuge 26, par exemple au niveau de l'ouïe d'entrée 27. Ladite ouïe d'entrée 27 est avantageusement agencée derrière la paroi latérale du récipient 8, et permet de capter l'air présent au voisinage de la périphérie dudit récipient 8, par aspiration autour dudit récipient 8.

Avantageusement, le moyen de chauffe principal 24 comprend également un élément calorifique 30 positionné au sein du flux aéraulique, de préférence à l'aval de l'ouïe de sortie 28 dans le sens du flux, de façon à transformer le flux aéraulique en flux chauffant 25.

Avantageusement, l'élément calorifique 30 comprend un système de résistances électriques avec des bandes résistives et/ou des fils résistifs maintenu(e)s sur un support isolant, ce qui s'avère être une solution économique en terme de place et performante en terme de rendement. De façon préférentielle, les bandés résistives et/ou les fils résistifs sont placé(e)s dans le flux aéraulique en fonction de la distribution de la vitesse d'air au sein du flux, de façon à éviter tout point chaud. La puissance de ce système de résistances électriques est de plus déterminée pour assurer un chauffage rapide des aliments sans les dessécher. De façon préférentielle, ladite puissance est sensiblement comprise entre 1 000 et 2 000 W, et plus préférentiellement entre 1 200 et 1 400 W.

De manière préférentielle, le ventilateur centrifuge 26 comprend une turbine 26A entraînée en rotation, selon un axe Y-Y' sensiblement perpendiculaire à l'axe X-X', par un deuxième moteur électrique 26B. La turbine 26A est de préférence insérée dans une volute formée d'un flasque arrière 27A rapporté sur un flasque avant 27B, ledit flasque avant 27B venant de préférence de matière avec le carter 12. Le flasque arrière 27A, en coopération avec la jupe 2B, forme ainsi un logement sensiblement fermé pour le deuxième moteur électrique 26B, lequel entraîne, de manière préférentielle, une roue de ventilation 31, positionnée à l'intérieur du logement du moteur 26B et servant au refroidissement dudit moteur 26B.

Avantageusement, le flux chauffant arrive avec une incidence rasante (i.e. inférieure à 45°) sur les aliments. Cette disposition technique permet d'agencer le dispositif de canalisation latéralement dans l'appareil. Ce guidage latéral de l'air chaud permet d'alléger le couvercle et de faciliter la manipulation de l'appareil tout en conservant une cuisson appropriée. Le nettoyage est également facilité, de même que le retrait ou la mise en place du récipient de cuisson 8.

Avantageusement, le dispositif de canalisation 29 comprend deux conduits 29A, 29B s'étendant en forme de Y à la périphérie de la friteuse 1 et prenant naissance, de façon commune, sensiblement au niveau de l'élément calorifique 30 ou à l'aval de ce dernier, dans le sens du flux.

De manière préférentielle, les conduits 29A, 29B sont montés dans le couvercle 2C et se terminent chacun, dans le sens du flux 25, par une tuyère 32 orientée de façon oblique relativement à l'axe X-X', vers l'avant 11 et le bas de la friteuse 1. La température d'air la plus élevée sera trouvée de préférence au voisinage desdites tuyères 32, face à ces dernières.

Dans cette configuration, le flux d'air chauffant 25 comprend ainsi deux veines distinctes qui convergent, de façon sensiblement symétrique, vers la pale 16. Ces deux veines convergeant de manière opposée contribuent à un excellent échange thermique avec les aliments, car elles génèrent et/ou favorisent, à leur point de rencontre, l'apparition de turbulences favorables à la transmission de chaleur.

La rencontre de deux flux d'air chaud sur les aliments est intéressante pour la cuisson car elle permet de réduire le gradient de température, d'humidité et de concentration en aérosol d'huile, par rapport à la mise en oeuvre d'un flux unique. Cette rencontre des flux permet ainsi une meilleure diffusion de la chaleur, ce qui améliore la cuisson.

Il est cependant bien entendu que l'invention n'est pas limitée à un nombre particulier de veines de fluide, et qu'il est tout à fait envisageable que le flux d'air chauffant 25 comprenne une seule veine ou plus de deux veines.

L'invention concerne en particulier de façon indépendante une friteuse comprenant au moins deux veines d'air chaud, convergeant l'une vers l'autre, et dirigées selon une incidence oblique vers les aliments à cuire.

Avantageusement l'ensemble du circuit aéraulique (lequel comprend notamment le ventilateur 26, l'élément calorifique 30 et le dispositif de canalisation 29) est conçu et dimensionné pour que le flux d'air chaud 25 arrive sur les aliments contenus dans le récipient 8 avec une vitesse sensiblement supérieure à 2 m/s, et de préférence sensiblement supérieure ou égale à 3 m/s. Le choix d'une telle vitesse minimale permet d'assurer la cuisson de manière optimale, en favorisant d'une part la création, à la surface des aliments, d'une enveloppe croustillante sans dessèchement de surface, et d'autre part une cuisson lente à coeur des aliments, de façon à leur conserver une consistance moelleuse.

Avantageusement, l'ensemble du circuit aéraulique est conçu pour que la température du flux d'air chaud 25 soit sensiblement inférieure à 200°C au niveau des aliments, et de préférence inférieure à 180°C au niveau des aliments. Une température sensiblement supérieure aux limites précitées est source de mauvaises odeurs et ne permet pas un gain significatif de temps de cuisson.

De manière préférentielle, le ventilateur centrifuge 26 et la pale 16 sont positionnés de façon sensiblement mutuellement opposée relativement au centre de la friteuse 1, matérialisé par l'axe X-X'. Plus particulièrement, le ventilateur 26 sera avantageusement positionné à l'arrière 10 de l'appareil tandis que la pale 16 sera située à l'avant 1, de l'appareil. Cette disposition technique permet de maximiser la longueur du flux aéraulique généré par le ventilateur 26, ce qui contribue à assurer un bon rendement de cuisson. Cette caractéristique peut d'ailleurs être encore améliorée en positionnant l'ouïe d'entrée 27 à une altitude inférieure à celle du bord supérieur 33 du récipient 8.

Afin d'améliorer encore les qualités de cuisson de la friteuse 1 conforme à l'invention, il est intéressant de pourvoir la face interne du récipient 8, destinée à être en regard des aliments, d'un revêtement à base d'un matériau constitué majoritairement de silicone. En particulier, il est intéressant de recouvrir le fond 8A du récipient 8 d'un revêtement de silicone, car le silicone, grâce à ses propriétés de microporosité, présente des qualités spécifiques de réaction avec la matière grasse (émulsion) qui permettent d'obtenir une meilleure répartition de l'huile sur les aliments tout en conservant un excellent coefficient de frottement, ce qui s'avère utile pour la préservation de l'intégrité des aliments lors de l'enduction par brassage.

En outre, un tel plat siliconé a la faculté de chauffer les frites qui sont à son contact, sans les brûler ou les surcolorer comme le ferait un plat métallique par exemple. La demanderesse a ainsi constaté que les propriétés de transfert par conduction entre des frites et un plat siliconé sont sensiblement comparables aux propriétés de transfert par convection forcée de l'air chaud sur les frites. Grâce à une telle enduction de silicone, l'uniformité de cuisson est assurée en évitant en particulier tout brunissage des pointes de frites.

Il est également envisageable que tout ou partie de la face interne du récipient 8 soit revêtue d'un matériau constitué majoritairement de polytétrafluoroéthylène (PTFE), matériau qui présente d'excellente propriétés thermiques et tribologiques.

Le récipient 8 peut cependant être réalisé tout simplement en acier inoxydable, sans traitement de surface particulier.

Avantageusement, la friteuse 1 conforme à l'invention forme, en fonctionnement (c'est-à-dire lorsque le couvercle 2C est fermé), une enceinte de cuisson sensiblement close autour du moyen de réception 5, c'est-à-dire de préférence fermée de façon étanche, ladite enceinte étant de préférence munie d'un moyen de fuite calibrée de vapeur vers l'extérieur (non représenté).

Cette mesure technique permet de contrôler l'hygrométrie régnant au sein de l'enceinte.

A cette fin, le moyen de fuite calibrée de vapeur est dimensionné de façon à :
- éviter une cuisson à l'étouffée, qui aurait lieu si l'enceinte était complètement étanche et qui pourrait provoquer une casse des frites,
- favoriser une consommation économe en énergie, car si l'échappement de vapeur est trop important, cela conduit à une dissipation d'énergie elle aussi importante, qui nécessite de surdimensionner l'élément calorifique 30.

De façon préférentielle, le moyen de fuite calibrée de vapeur comprend un orifice de fuite (non représenté), disposé de préférence au voisinage de l'ouïe d'entrée 27 du ventilateur 26, ce qui permet une évacuation contrôlée en continu de la vapeur tout au long du cycle de cuisson, ainsi qu'un renouvellement contrôlé de l'air à l'intérieur de l'enceinte.

Avantageusement, la friteuse 1 comprend un moyen de stockage 34 de matière grasse 35, distinct du moyen de réception 5 (c'est-à-dire en l'occurrence du récipient 8) et reliée fonctionnellement audit moyen de réception 5 pour alimenter le moyen de réception 5 en matière grasse 35, laquelle se présente de préférence sous forme liquide (ou fondue).

Avantageusement, le moyen de stockage distinct 34 comprend un orifice de déversement 36 muni d'un moyen d'obturation 37, ledit moyen de stockage 34 étant susceptible de se trouver d'une part dans une configuration de rappel et de fermeture (représentées à la figure 2), dans laquelle la matière grasse 35 est maintenue par le moyen d'obturation 37 au sein du moyen de stockage 34 et d'autre part dans une configuration d'ouverture (non représentée), dans laquelle le moyen d'obturation autorise le déversement de la matière grasse 35 par l'orifice 36 hors du moyen de stockage 34 vers le moyen de réception 5, en l'occurrence le récipient 8. Avantageusement, le moyen de stockage 34 comprend un gobelet 34A muni à sa base d'une bouche formant orifice de déversement 36, le moyen d'obturation 37 comprenant un pointeau à tête divergente solidaire du moyen de réception 5 et inséré dans ladite bouche. Le gobelet 34A est monté à coulissement élastique relativement audit pointeau entre une première position, correspondant à la configuration d'ouverture du moyen de stockage et une deuxième position, correspondant à la configuration de rappel et de fermeture dudit moyen de stockage 34. Le pointeau est quant à lui monté fixe en position au sein du corps principal 2.

Un tel gobelet, qui présente éventuellement des graduations de dosage, permet à l'utilisateur de contrôler précisément la quantité d'huile qu'il introduit dans la friteuse, ce qui permet une économie en matière grasse tout en favorisant une cuisson plus saine.

Avantageusement, le moyen de stockage 34, en l'occurrence le gobelet 34A, est monté sur le moyen de réception 5 pour que lorsque le moyen de stockage 34 se trouve en configuration d'ouverture, la matière grasse 35 se déverse directement dans le moyen de réception 5. A cette fin, le gobelet 34A est monté de préférence coaxialement à l'axe X-X', de telle sorte que l'orifice de déversement 36 forme, en collaboration avec le pointeau, une ouverture en forme de couronne autour du pointeau, de façon à favoriser un écoulement multi-directionnel de la matière grasse 35 sur la paroi latérale interne 8C du récipient 8.

Avantageusement, le couvercle 2C est relié fonctionnellement au moyen de stockage 34 pour que la position de fermeture du couvercle 2C corresponde sensiblement à la configuration d'ouverture dudit moyen de stockage 34.

Ainsi, dans le cas représenté à la figure 2, le couvercle 2C, lorsqu'il est en position fermée, vient presser le gobelet 34A vers le bas ce qui provoque un mouvement relatif du pointeau à tête divergente 37 et dudit gobelet 34A, engendrant l'écoulement de la matière grasse 35.

De préférence, le moyen de stockage 34 est monté de façon amovible relativement au corps principal 2. Avantageusement, le moyen de stockage 34 est à usage unique.

Avantageusement, l'appareil conforme à l'invention peut comporter un orifice permettant le remplissage du moyen de stockage 34 lorsque le couvercle 2C ferme le corps principal 2. Cet orifice d'appoint, qui peut être prolongé d'un conduit, est par exemple ménagé dans le couvercle 2C, ou plus généralement dans le corps principal 2. Cette disposition technique permet de rajouter de la matière grasse alors que la cuisson a commencé, par exemple à la suite d'un oubli, ou pour obtenir des frites un peu plus dorées.

En alternative, la friteuse 1 peut ne pas comprendre de moyen de stockage distinct 34. Dans ce cas, la matière grasse peut être versée directement par l'utilisateur sur les aliments à cuire, dans le récipient 8.

On va maintenant décrire un exemple d'utilisation de la friteuse 1 conforme à l'invention. Dans cet exemple, l'utilisateur se propose de frire 1 Kg de morceaux de pommes de terre fraîches coupées manuellement.

Pour cela, l'utilisateur introduit lesdits morceaux de pommes de terre dans le plat 8. L'utilisateur introduit également une faible quantité d'huile (par exemple 30 grammes ou moins) dans le gobelet 34A. Du fait de la faible quantité d'huile mise en jeu, l'utilisateur peut utiliser une huile d'excellente qualité, qui peut s'avérer meilleure pour la santé et/ou le goût.

L'utilisateur referme ensuite le couvercle 2C, ce qui à pour effet de presser le gobelet 34A vers le bas, parallèlement à l'axe X-X', provoquant ainsi la vidange de l'huile 35 contenue dans le gobelet dans le plat 8. Cette vidange s'effectue idéalement dans toutes les directions, ce qui contribue à favoriser une enduction rapide des aliments.

Le cycle de cuisson démarre alors, ce qui engendre la rotation du récipient 8 autour de l'axe X-X' et donc le brassage à l'aide de la pale fixe 16 des morceaux de pommes de terre et de l'huile répandus dans le plat. Ce brassage conduit à l'établissement d'une pellicule d'huile à la surface de chaque morceau de pomme de terre. Simultanément ou éventuellement après un temps de latence, le ventilateur 26 et l'élément calorifique 30 sont mis en route, ce qui conduit à l'établissement d'un flux d'air chaud 25 qui vient chauffer directement les morceaux de pommes de terre enduits d'huile. Le récipient 8 fait donc office également de récipient de cuisson. La cuisson s'effectue ainsi par chauffage direct des aliments, et non, comme dans l'art antérieur, par immersion des aliments dans un bain de matière grasse chaude.

Dans une première phase du cycle de cuisson, l'air pulsé chauffe les morceaux de pommes de terre de la couche supérieure, lesquels produisent rapidement de la vapeur d'eau. Cette vapeur d'eau, en se condensant sur les morceaux, plus froids, des couches inférieures, fait ainsi office d'échangeur de chaleur avec lesdits morceaux des couches inférieures. Ce mécanisme de cuisson dans une ambiance saturée en vapeur permet ainsi un chauffage rapide et homogène de l'ensemble des morceaux de pommes de terre présents dans le récipient 8. Ce chauffage homogène est facilité par le brassage permanent des morceaux opéré par le récipient 8 rotatif et la pale 16 (cas de la variante de la figure 2) ou par le récipient 8 immobile et la pale 16 rotative (cas de la variante de la figure 6). En d'autres termes, en combinaison avec le récipient tournant et la pale fixe, les flux d'air chaud dirigés vers la pale permettent d'atteindre les aliments dans une zone dans laquelle ils sont en mouvement les uns par rapport aux autres, ce qui augmente encore l'homogénéité de cuisson.

Les aliments sont ainsi soumis à un cycle de chauffe directe par le flux d'air chaud, puis de diffusion/absorption des calories à l'intérieur des aliments, puis à nouveau de chauffe directe par le flux d'air chaud, et ainsi de suite.

De préférence, la vitesse de rotation du récipient 8 est inférieure à 10 tours par minute, et encore plus préférentiellement est sensiblement comprise entre 2 et 3 tours par minute.

Les morceaux subissent une surchauffe lorsqu'ils sont sous le flux direct d'air, et absorbent la chaleur lorsqu'ils quittent cette zone, avant de subir une nouvelle surchauffe. Cette alternance permet une meilleure diffusion de la chaleur dans les aliments, et contribue à éviter un dessèchement excessif.

Il se crée ainsi, dans cette première phase du cycle, un équilibre entre évaporation et recondensation, jusqu'à ce que la vapeur d'eau ait été progressivement évacuée hors de la friteuse par le moyen de fuite calibrée.

Commence alors une deuxième phase de cuisson, lorsque le taux de vapeur a été sensiblement réduit. Durant cette deuxième phase, la température moyenne dans l'enceinte atteint sensiblement 160°C (alors qu'elle était d'environ 100-120°C au cours de la première phase) et la réaction de Maillard (coloration des frites) a lieu. Durant cette deuxième phase, le brassage des morceaux est poursuivi continûment à l'aide de la pale 16 et de la rotation du plat 8, afin d'homogénéiser la cuisson.

Le cycle de cuisson, qui aura duré, dans son intégralité, environ 30 minutes, se termine alors. L'utilisateur peut alors ouvrir le couvercle 2C et extraire simultanément le récipient 8 et la pale 16 à l'aide de la poignée amovible 17. Le récipient 8 fait alors office de plat de service, et contient désormais des frites prêtes à servir dont le goût et l'aspect sont similaires aux frites fraîches cultes dans un bain d'huile.

Le fait que la poignée 17, qui permet le retrait hors du corps principal 2 du récipient 8 et éventuellement de la pale 16, soit disposée à l'opposé du circuit d'air chaud, relativement au centre de l'appareil, permet une bonne ergonomie de l'appareil.

L'invention concerne ainsi, de manière indépendante, selon un aspect non revendiqué, une friteuse comprenant d'une part un récipient 8 et d'autre part un moyen de remuage 6, lequel est de préférence solidaire d'une poignée 17 permettant l'extraction du récipient 8 hors de l'enceinte de cuisson.

L'invention concerne également selon un aspect non revendiqué un procédé de friture d'aliment comprenant une étape d'enduction dans laquelle les aliments sont enduits d'une pellicule de matière grasse par brassage desdits aliments avec de la matière grasse.

Ce procédé de friture est un procédé par cuisson sèche, c'est-à-dire que l'opération de cuisson proprement dite n'est pas opérée par une immersion, même partielle ou momentanée, dans un bain de matière grasse chauffée. Le procédé de friture visé est ainsi un procédé sans immersion dans un bain de matière grasse chaude.

De manière préférentielle, ce procédé est un procédé de friture d'aliments particulaires, tels que des morceaux de pommes de terre. De manière préférentielle, ce procédé est également un procédé domestique, c'est-à-dire qui peut être mis en oeuvre, dans son intégralité, dans un cadre non professionnel, à caractère familial.

L'étape d'enduction est réalisée de façon automatique, c'est-à-dire sans intervention de l'utilisateur comme cela a été précisé précédemment.

Avantageusement, le procédé comprend une étape de chauffage des aliments, les étapes d'enduction et de chauffage étant de préférence menées de façon sensiblement simultanée, ou du moins effectuées à l'aide d'un appareillage unique, et notamment un récipient unique 8 comme cela va être décrit ci-après.

Avantageusement, dans l'étape d'enduction, on met en mouvement les aliments et la matière grasse et on place sur leur trajectoire au moins un obstacle, de façon à remuer lesdits aliments et matière grasse, et enduire ainsi les aliments de matière grasse.

De façon préférentielle, dans l'étape d'enduction, on place les aliments et de la matière grasse dans un récipient 8 susceptible d'être mis en rotation de façon à mettre en mouvement les aliments et la matière grasse, une pale fixe 16 formant moyen de remuage 6 étant positionnée dans le récipient 8, de façon à former un obstacle à l'encontre des aliments mis en mouvement par la rotation du récipient 8. Cela permet de réaliser de façon simple et rapide une enduction sensiblement homogène et individuelle des aliments par une couche de matière grasse.

De manière alternative, tel que cela est illustré à la figure 6, il est bien évidemment envisageable de placer les aliments et la matière grasse dans un récipient 8 immobile, une pale rotative 16 formant moyen de remuage 6 étant positionnée dans le récipient 8, de façon à mettre en mouvement les aliments dans le récipient 8 sous l'effet de la rotation de ladite pale 16.

De manière préférentielle, on génère, dans l'étape de chauffage, un flux d'air chaud orienté de façon à frapper sensiblement directement au moins une partie des aliments, le flux d'air chaud étant orienté de façon préférentielle en direction de la pale 16.

De façon préférentielle, le procédé est effectué dans son intégralité au sein d'une enceinte sensiblement close, le procédé comprenant toutefois, de façon préférentielle, une étape d'évacuation contrôlée vers l'extérieur de la vapeur contenue dans l'enceinte à l'aide d'un moyen de fuite calibrée de vapeur. Le moyen de fuite calibrée de vapeur est avantageusement conçu pour permettre une phase préliminaire de cuisson en ambiance saturée en vapeur, suivie d'une phase ultérieure de brunissage en ambiance peu humide, la majorité de la vapeur créé par la chauffe des aliments en début de cuisson ayant été progressivement et automatiquement évacuée.

Dans ce qui précède, on a envisagé un appareil de cuisson formé par une friteuse.

Il est toutefois envisageable que l'appareil conforme à l'invention soit utilisé pour cuire et/ou réchauffer des aliments sans pour autant les frire, en particulier lorsqu'un fluide de cuisson non gras est mis en oeuvre.

Il est également envisageable d'utiliser l'appareil sans ajout de matière grasse dans le récipient, lorsque cette dernière est déjà contenue dans les aliments (cas d'aliments surgelés et/ou pré-frits par exemple).

### POSSIBILITE D'APPLICATION INDUSTRIELLE

L'invention trouve son application industrielle dans la conception, la fabrication et l'utilisation d'un appareil de cuisson d'aliments.

## Revendications

1. Friteuse à cuisson sèche (1) comprenant :
- un moyen de réception (5) conçu pour contenir à la fois les aliments et de la matière grasse,
- un moyen de remuage (6) des aliments contenus dans le moyen de réception (5),
le moyen de réception (5) et le moyen de remuage (6) étant conçus pour être mis en mouvement l'un par rapport à l'autre,
**caractérisée en ce que** le moyen de réception (5) est monté de façon amovible au sein d'un corps principal (2) et **en ce que** le moyen de réception (5) et le moyen de remuage (6) sont conçus pour être mis en mouvement l'un par rapport à l'autre au sein du corps principal (2), de façon à enduire automatiquement les aliments d'une pellicule de matière grasse par brassage des aliments avec la matière grasse au sein dudit moyen de réception (5).

2. Friteuse à cuisson sèche (1) selon la revendication 1 **caractérisée en ce qu'**elle forme, en fonctionnement, une enceinte de cuisson sensiblement close.

3. Friteuse à cuisson sèche (1) selon la revendication 1 ou 2 **caractérisée en ce que** le corps principal (2) est muni d'un couvercle (2C) monté mobile entre d'une part une position de fermeture dans laquelle le couvercle forme avec le corps principal une enceinte sensiblement fermée autour des aliments à frire, et d'autre part une position d'ouverture autorisant l'introduction des aliments à frire au sein du corps principal.

4. Friteuse à cuisson sèche (1) selon la revendication 3 **caractérisée en ce qu'**elle comprend une charnière (3) assurant la liaison entre le couvercle (2C) et le corps principal (2).

5. Friteuse à cuisson sèche (1) selon l'une des revendications 1 à 4 **caractérisée en ce que** le moyen de réception (5) et le moyen de remuage (6) sont conçus pour être mis en mouvement l'un par rapport à l'autre selon un mouvement de rotation autour d'un axe (X-X') vertical.

6. Friteuse à cuisson sèche (1) selon l'une des revendications 1 à 4 **caractérisée en ce que** le moyen de réception (5) comprend un récipient (8), ladite friteuse (1) comprenant en outre une poignée (17) permettant le retrait du récipient (8) hors du corps principal (2).

7. Friteuse à cuisson sèche (1) selon l'une des revendications 1 à 6 **caractérisée en ce que** le moyen de réception (5) est monté immobile en position relativement au corps principal (2), tandis que le moyen de remuage (6) est d'une part monté à rotation relativement au moyen de réception (5), et d'autre part relié fonctionnellement à un moyen moteur (7) pour être entraîné en rotation par ce dernier.

8. Friteuse à cuisson sèche (1) selon l'une des revendications 1 à 6 **caractérisée en ce que** le moyen de remuage (6) est monté immobile en position relativement au corps principal (2), tandis que le moyen de réception (5) est d'une part monté à rotation relativement au corps principal (2) et au moyen de remuage (6) et d'autre part relié fonctionnellement à un moyen moteur (7) pour être entraîné en rotation par ce dernier.

9. Friteuse à cuisson sèche (1) selon l'une des revendications 1 à 8 **caractérisée en ce qu'**elle comporte, monté sur le corps principal (2), un moyen de chauffe principal (24) assurant à lui seul au moins l'essentiel de l'apport thermique permettant la cuisson.

10. Friteuse à cuisson sèche (1) selon la revendication 9 **caractérisée en ce que** ledit moyen de chauffe principal (24) est conçu pour générer un flux chauffant (25) orienté de façon à frapper sensiblement directement au moins une partie des aliments.

11. Friteuse à cuisson sèche (1) selon la revendication 9 ou 10 **caractérisée en ce que** le moyen de chauffe principal (24) est conçu pour générer un flux chauffant (25) au-dessus du moyen de réception (5).

12. Friteuse à cuisson sèche (1) selon l'une des revendications 9 à 11 **caractérisée en ce que** le moyen de chauffe principal (24) est conçu et agencé pour assurer la totalité dudit apport thermique permettant la cuisson.

13. Friteuse à cuisson sèche (1) selon la revendication 10 **caractérisée en ce que** le flux chauffant (25) est un flux d'air chaud ou est issu d'un chauffage à infra-rouges.

14. Friteuse à cuisson sèche (1) selon la revendication 13 **caractérisée en ce que** le moyen de chauffe principal (24) comprend un ventilateur (26) générant un flux aéraulique en aspirant de l'air au sein du corps principal (2) par au moins une ouïe d'entrée (27), et en le refoulant, par au moins une ouïe de sortie (28), dans un dispositif de canalisation (29, 29A, 29B) débouchant en direction et au-dessus des aliments présents dans le corps principal (2), le moyen de chauffe principal (24) comprenant également un élément calorifique (30) positionné au sein du flux aéraulique, à l'aval de l'ouïe de sortie (28), de façon à transformer le flux aéraulique en flux chauffant (25).

15. Friteuse à cuisson sèche selon l'une des revendications 1 à 14 **caractérisée en ce qu'**elle est conçue et dimensionnée pour un usage domestique.

## Claims

1. Dry fryer (1) comprising:
- a receiver means (5) designed to contain both food and fat;
- a stirrer means (6) for stirring food contained in the receiver means (5),
the receiver means (5) and the stirrer means (6) being designed to be moved with respect to each other, **characterized in that** the receiver means (5) is removably mounted inside a main body (2) and **in that** the receiver means (5) and the stirrer means (6) are designed to be moved with respect to each other inside the main body (2), for automatically coating said food with a film of fat by mingling said food with fat inside said receiver means (5).

2. Dry fryer (1) according to claim 1, **characterized in that** it forms, when operating, a substantially closed cooking chamber.

3. Dry fryer (1) according to claim 1 or 2 **characterized in that** the main body (2) is provided with a lid (2C) movably mounted between a closed position in which the lid together with the main body form a substantially sealed chamber around the food to be fried, and an open position allowing food to be fried to be introduced into the main body.

4. Dry fryer (1) according to claim 3 **characterized in that** it comprises a hinge (3) for connecting the lid (2C) and the main body (2).

5. Dry fryer (1) according to any one of claims 1 to 4, **characterized in that** the receiver means (5) and stirrer means (6) are designed to be moved with respect to each other in rotation about a vertical axis (X-X').

6. Dry fryer (1) according to any one of claims 1 to 4, **characterized in that** the receiver means (5) comprises a receptacle (8), said fryer (1) further comprising a handle (17) for removing the receptacle (8) from the main body (2).

7. Dry fryer (1) according to any one of claims 1 to 6, **characterized in that** the receiver means (5) is mounted in a position that is stationary relative to the main body (2), while the stirrer means (6) is mounted in rotation relative to the receiver means (5) and is functionally connected to a motor means (7) to be driven in rotation thereby.

8. Dry fryer (1) according to any one of claims 1 to 6, **characterised in that** the stirrer means (6) is mounted in a position that is stationary relative to the main body (2), while the receiver means (5) is mounted in rotation relative to both the main body (2) and the stirrer means (6), and is functionally connected to a motor means (7) to be driven in rotation thereby.

9. Dry fryer (1) according to any one of claims 1 to 8, **characterised in that** it comprises, mounted on the main body (2), a main heater means (24) by itself providing at least most of the contribution of the heat for cooking.

10. Dry fryer (1) according to claim 9, **characterised in that** said main heater means (24) is designed to generate a flow of heat (25) orientated so as to strike substantially directly at least a portion of the food.

11. Dry fryer (1) according to claim 9 or 10, **characterised in that** the main heater means (24) is designed to generate a flow of heat (25) above the receiver means (5).

12. Dry fryer (1) according to any one of claims 9 to 11, **characterised in that** the main heater means (24) is designed and arranged to supply all of the heat for cooking.

13. Dry fryer (1) according to claim 10, **characterised in that** the flow of heat (25) is either a flow of hot air or a flow of heat emanating from infrared heating.

14. Dry fryer (1) according to claim 13, **characterised in that** the main heater means (24) comprises a fan (26) generating a flow of air by sucking air from the main body (2) via at least one inlet vent (27), and discharging it via at least one outlet vent (28) into a ducting device (29, 29A, 29B) opening in a direction above the food present in the main body (2), the main heater means (24) also comprising a heater element (30) positioned in the air flow, downstream from the outlet vent (28), to transform the air flow into a flow of heat (25).

15. Dry fryer according to any one of claims 1 to 14, **characterised in that** it is designed and dimensioned for domestic use.

## Patentansprüche

1. Trockenfritteuse (1), umfassend:
- ein Aufnahmemittel (5), das dazu vorgesehen ist, sowohl die Nahrungsmittel als auch Fett zu enthalten,
- ein Rührmittel (6) für die in dem Aufnahmemittel (5) enthaltenen Nahrungsmittel,
wobei das Aufnahmemittel (5) und das Rührmittel (6) derart ausgeführt sind, dass sie in Bezug zueinander in Bewegung versetzt werden,
**dadurch gekennzeichnet, dass** das Aufnahmemittel (5) abnehmbar innerhalb eines Hauptkörpers (2) montiert ist und dass das Aufnahmemittel (5) und das Rührmittel (6) derart ausgeführt sind, dass sie in Bezug zueinander in dem Hauptkörper (2) in Bewegung versetzt werden, um die Nahrungsmittel automatisch mit einer Fettschicht durch Durchrühren der Nahrungsmittel mit dem Fett innerhalb dieses Aufnahmemittels (5) zu versehen.

2. Trockenfritteuse (1) nach Anspruch 1, **dadurch gekennzeichnet dass** sie während des Betriebs einen im Wesentlichen geschlossenen Garraum bildet.

3. Trockenfritteuse (1) nach Anspruch 1 oder 2, **dadurch gekennzeichnet, dass** der Hauptkörper (2) mit einem Deckel (2C) versehen ist, der beweglich zwischen einerseits einer Verschlussposition, in der der Deckel mit dem Hauptkörper einen im Wesentlichen geschlossenen Raum um die zu frittierenden Nahrungsmittel bildet, und andererseits einer öffnungsposition, die die Einführung der zu frittierenden Nahrungsmittel in den Hauptkörper ermöglicht, montiert ist.

4. Trockenfritteuse (1) nach Anspruch 3, **dadurch gekennzeichnet, dass** sie ein Scharnier (3) umfasst, das die Verbindung zwischen dem Deckel (2C) und dem Hauptkörper (2) sicherstellt.

5. Trockenfritteuse (1) nach einem der Ansprüche 1 bis 4, **dadurch gekennzeichnet, dass** das Aufnahmemittel (5) und das Rührmittel (6) derart ausgeführt sind, dass sie in Bezug zueinander in einer Drehbewegung um eine Vertikalachse (X-X') in Bewegung versetzt werden.

6. Trockenfritteuse (1) nach einem der Ansprüche 1 bis 4, **dadurch gekennzeichnet, dass** das Aufnahmemittel (5) einen Behälter (8) umfasst, wobei die Fritteuse (1) ferner einen Griff (17) umfasst, der die Entnahme des Behälters (8) aus dem Hauptkörper (2) ermöglicht.

7. Trockenfritteuse (1) nach einem der Ansprüche 1 bis 6, **dadurch gekennzeichnet, dass** das Aufnahmemittel (5) unbeweglich in einer Position in Bezug zum Hauptkörper (2) montiert ist, während das Rührmittel (6) einerseits in Drehung in Bezug zum Aufnahmemittel (5) montiert und andererseits funktionell mit einem Antriebsmittel (7) verbunden ist, um von diesem letztgenannten in Drehung versetzt zu werden.

8. Trockenfritteuse (1) nach einem der Ansprüche 1 bis 6, **dadurch gekennzeichnet, dass** das Rührmittel (6) unbeweglich in einer Position in Bezug zum Hauptkörper (2) montiert ist, während das Aufnahmemittel (5) einerseits in Drehung in Bezug zum Hauptkörper (2) und zum Rührmittel (6) montiert ist und andererseits funktionell mit einem Antriebsmittel (7) verbunden ist, um von diesem letztgenannten in Drehung versetzt zu werden.

9. Trockenfritteuse (1) nach einem der Ansprüche 1 bis 8, **dadurch gekennzeichnet, dass** sie auf dem Hauptkörper (2) montiert, ein Hauptheizmittel (24) umfasst, das alleine zumindest das Wesentliche der Wärmezufuhr, die das Garen ermöglicht, sicherstellt.

10. Trockenfritteuse (1) nach Anspruch 9, **dadurch gekennzeichnet, dass** das Hauptheizmittel (24) derart ausgeführt ist, dass es einen Heizstrom (25) erzeugt, der derart ausgerichtet ist, dass er im Wesentlichen direkt auf zumindest einen Teil der Nahrungsmittel trifft.

11. Trockenfritteuse (1) nach Anspruch 9 oder 10, **dadurch gekennzeichnet, dass** das Hauptheizmittel (24) derart ausgeführt ist, dass es einen Heizstrom (25) über dem Aufnahmemittel (5) erzeugt.

12. Trockenfritteuse (1) nach einem der Ansprüche 9 bis 11, **dadurch gekennzeichnet, dass** das Hauptheizmittel (24) derart ausgeführt und angeordnet ist, dass es die Gesamtheit der Wärmezufuhr, die das Garen ermöglicht, sicherstellt.

13. Trockenfritteuse (1) nach Anspruch 10, **dadurch gekennzeichnet, dass** der Heizstrom (25) ein Heißluftstrom ist oder von einer Infrarotheizung kommt.

14. Trockenfritteuse (1) nach Anspruch 13, **dadurch gekennzeichnet, dass** das Hauptheizmittel (24) einen Ventilator (26) umfasst, der einen Luftstrom erzeugt, wobei der Luft in dem Hauptkörper (2) durch mindestens eine Eintrittsöffnung (27) ansaugt und sie durch mindestens eine Austrittsöffnung (28) in eine Kanalisiervorrichtung (29, 29A, 29B) pumpt, die in Richtung und über den Nahrungsmitteln mündet, die in dem Hauptkörper (2) vorhanden sind, wobei das Hauptheizmittel (24) auch ein Wärmeelement (30) umfasst, das in dem Luftstrom stromabwärts zur Austrittsöffnung (28) angeordnet ist, um den Luftstrom in einen Heizstrom (25) umzuwandeln.

15. Trockenfritteuse nach einem der Ansprüche 1 bis 14, **dadurch gekennzeichnet, dass** sie für einen Haushaltsgebrauch ausgeführt und dimensioniert ist.
